# EUROPÄISCHE PATENTSCHRIFT

(11) **EP 1 086 408 B1**
(45) Veröffentlichungstag und Bekanntmachung des Hinweises auf die Patenterteilung: **29.01.2003**
(21) Anmeldenummer: 99938156.9
(22) Anmeldetag: 10.06.1999
(51) Int. Cl.: G05B 19/042, G05B 19/05

(54) **STEUEREINRICHTUNG FÜR EINE MASCHINE, ANLAGE ODER EIN GERÄT, SOWIE VERFAHREN ZUM ÜBERWACHEN EINER STEUERUNG**
CONTROL DEVICE FOR A MACHINE, SYSTEM, OR APPARATUS AND A METHOD FOR MONITORING A CONTROL
DISPOSITIF DE COMMANDE POUR UNE MACHINE, UNE INSTALLATION OU UN APPAREIL, ET PROCEDE DE SURVEILLANCE D'UNE COMMANDE

(30) Priorität: 10.06.1998 DE 19825974
(43) Veröffentlichungstag der Anmeldung: 28.03.2001
(73) Patentinhaber: SIEMENS AKTIENGESELLSCHAFT, 80333 München (DE)
(72) Erfinder: ZEILINGER, Reinhold, D-91468 Gutenstetten (DE)
(86) Internationale Anmeldenummer: DE9901695
(87) Internationale Veröffentlichungsnummer: WO99064938

(56) Entgegenhaltungen:
- EP-A- 0 460 308
- EP-A- 0 575 854
- DE-A- 3 718 582
- DE-A- 3 726 489
- DE-A- 4 341 082
- DE-A- 19 529 213
- FR-A- 2 561 410
- US-A- 4 521 871
- US-A- 5 107 425
- PATENT ABSTRACTS OF JAPAN vol. 1997, no. 08, 29. August 1997 (1997-08-29) & JP 09 092318 A (NIPPON TELEGR &TELEPH CORP <NTT>), 4. April 1997 (1997-04-04)

## Beschreibung

Die Erfindung betrifft eine Steuereinrichtung, einer Anlage mit einer ersten Steuereinheit und einer mit der ersten Steuereinheit in Signalaustausch stehenden zweiten Steuereinheit, die zur Überwachung der ersten Steuereinheit vorgesehen ist. Außerdem betrifft die Erfindung ein Verfahren zum Überwachen einer Steuerung.

Als Stand der Technik sind sicherheitsgerichtete Steuerungen (z.B. speicherprogrammierbare Steuerungen wie Simatic S5-95F) bekannt, die jedoch nur einen eingeengten Funktionsumfang und eine geringe Verarbeitungsleistung aufweisen, so daß bei einer Bearbeitung umfangreicher Automatisierungsaufgaben mehrere Steuerungen eingesetzt werden müssen, um bestimmte gehobene Sicherheitsanforderungen (z.B. Anforderungsklasse AK3 nach DIN V 19250) zu erfüllen.

Aus der EP 0 575 854 A2, der DE 37 26 489 A1 und der EP 0 460 308 A1 sind Steuereinrichtungen bekannt, mit zwei einander überwachenden Steuereinheiten. Die DE 43 41 082 A1 offenbart eine Schaltungsanordnung für sicherheitskritische Regelungssysteme bei der Eingangsdaten in zwei Steuereinheiten teilweise redundant verarbeitet werden und ein Vergleich der verarbeiteten Eingangsdaten zur Erzeugung von Regelsignalen herangezogen wird.

Der Erfindung liegt die Aufgabe zugrunde, eine Steuereinrichtung sowie ein Verfahren zum Überwachen einer Steuerung anzugeben, bei welchen erhöhte Sicherheitsanforderungen (z.B. AK3 nach DIN V 19250) kostengünstig erfüllt werden.

Die auf die Steuereinrichtung gerichtete Aufgabe wird durch eine Steuereinrichtung der eingangs genannten Art gelöst, die erfindungsgemäß ein Vergleichsmodul aufweist, das zum Vergleich der Zustände der Steuereinheiten vorgesehen ist und die einen ersten mit dem Vergleichsmodul im Signalaustausch stehenden Abschaltbaustein aufweist, der zur Abschaltung der Anlage oder Maschine im Falle des Ausbleibens eines Triggerpulses von einer der Steuereinheiten vorgesehen ist.

Vorteilhafte Ausführungsformen der Steuereinrichtung werden in den Unteransprüchen 2 bis 7 beschrieben.

Die auf das Verfahren gerichtete Aufgabe wird durch ein Verfahren zum Überwachen einer Steuerung gelöst, bei dem
- Eingangssignale von Peripherieelementen in zwei Steuereinheiten identisch verarbeitet werden,
- die erste Steuereinheit und die zweite Steuereinheit parallel Ausgangssignale für Peripherieelemente ermitteln,
- die Zustände der ersten Steuereinheit mit den Zuständen der zweiten Steuereinheit verglichen werden,
- nur bei Zustandsidentität ein Triggersignal an einen Abschaltbaustein abgesendet wird,
- die Ablauffunktionen der Steuerung nur bei regelmäßiger Triggerung des Abschaltbausteins aufrechterhalten bleibt.

Vorteilhafte Verfahrensvarianten finden sich in den Unteransprüchen 9 - 20.

Bei der erfindungsgemäßen Steuereinrichtung ist zusätzlich zu der ersten Steuereinheit eine weitere, zweite Steuereinheit vorgesehen, welche die erste Steuereinheit überwacht, wodurch insgesamt die Sicherheitserfordernisse der Anforderungsklasse 3 (AK3) erfüllt werden können, ohne daß die Steuereinrichtung und die Peripherieelemente nach DIN V 19250 qualifiziert sein müssen.

Die erste Steuereinheit ist beispielsweise eine Modul- und Anlagensteuerung, insbesondere einer Brennstoffzellenanlage, die die Brennstoffzellenanlage und die Abläufe in einem Brennstoffzellenmodul der Brennstoffzellenanlage steuert. Die tatsächliche Regelung, Steuerung und Überwachung des automatisierten Prozesses, beispielsweise der Brennstoffzellenanlage, erfolgt durch die erste Steuereinheit.

Zur Überwachung der ersten Steuereinheit ist eine zweite Steuereinheit vorgesehen. Beide Steuereinheiten erhalten vorteilhafterweise identische Eingangssignale von den Peripherieelementen der Anlage. Die zweite Steuereinheit überwacht nun die Verarbeitung der Eingangssignale durch die erste Steuereinheit, indem die zweite Steuereinheit die Eingangssignale identisch verarbeitet.

Im folgenden werden parallel unter Verwendung der Algorithmen für die Steuerung, Regelung und Überwachung sowohl in der ersten Steuereinheit als auch in der zweiten Steuereinheit die jeweiligen Ausgangssignale für die Peripherieelemente ermittelt.

Vorteilhafterweise werden diese Ausgangssignale jedoch nur von der ersten Steuereinheit zu den Peripherieelementen gesendet.

Nach der Ermittlung der Ausgangssignale sendet die erste Steuereinheit vorteilhafterweise aktuelle Zustandsinformationen zur zweiten Steuereinheit und empfängt bei einer gleichzeitigen Überwachung der zweiten Steuereinheit durch die erste Steuereinheit auch die aktuellen Zustandsinformationen der zweiten Steuereinheit.

In einem Vergleichsmodul, das sich beispielsweise in der ersten Steuereinheit befindet, werden nun die Zustände der beiden Steuereinheiten verglichen. Vorteilhaft ist es, wenn ein solches Vergleichsmodul in jeder Steuereinheit vorliegt. Wenn nun beim Zustandsvergleich eine Zustandsidentität festgestellt wird, wird ein Abschaltbaustein getriggert. Bei Triggerung des Abschaltbausteins schaltet dieser nicht ab, so daß die Ablauffunktionen der Steuerung aufrechterhalten bleiben.

Wenn nach einer parametrisierbaren Synchronisationszeit festgestellt wird, daß die Zustandsinformationen voneinander abweichen, so liegt ein Störfall vor. Das Vergleichsmodul, das mit dem Abschaltbaustein im Signalaustausch steht, also direkt oder über weitere Module mit dem Abschaltbaustein in Verbindung steht, sendet nun kein Triggersignal an den oder die Abschaltbausteine. Hierdurch schaltet der Abschaltbaustein die Anlage ab. Dies geschieht beispielsweise dadurch, daß die Stromversorgung für die Steuerung, und somit die Steuerung an sich, und/oder die Stromversorgung zu Elementen der Anlage durch den Abschaltbaustein unterbrochen wird.

Bei einer Brennstoffzellenanlage beispielsweise gehen sämtliche Stellglieder im stromlosen Zustand in einen sicheren Zustand: Wasserstoffventile schließen, Pumpen schalten ab und auch Module der Steuereinrichtung gehen durch eine "Reset" in ihre Ausgangskonfiguration zurück.

Der Zustandsvergleich in der ersten Steuereinheit und/oder der zweiten Steuereinheit kann nach der Ermittlung der Ausgangssignale in der ersten und zweiten Steuereinheit gegebenenfalls so häufig wie notwendig auch nach einzelnen Verarbeitungsschritten erfolgen.

In einer vorteilhaften Ausbildung der Erfindung empfängt die erste Steuereinheit ein Triggersignal für den oder die Abschaltbausteine von der zweiten Steuereinheit, wenn in der zweiten Steuereinheit beim Zustandsvergleich Identität festgestellt wurde.

Dieses empfangene Triggersignal wird von der ersten Steuereinheit weitergereicht, wenn auch der Zustandsvergleich in der ersten Steuereinheit eine Identität ergeben hat. Daraufhin ist die gegenseitige Überwachung der beiden Steuereinheiten im momentanen Überwachungszyklus abgeschlossen und es kann ein Triggersignal an den oder die Abschaltbausteine gesendet werden, um die Steuerfunktionen weiter aufrechtzuerhalten.

Die Triggerung des Überwachungsbausteins kann über Digitalausgänge eines CAN-Moduls erfolgen.

Die erste und die zweite Steuereinheit sind vorteilhafterweise über einen Feldbus, insbesondere einen CAN-Bus (Controller-Area-Network-Bus), miteinander und mit den weiteren Elementen der Steuerung verbunden.

Zweckmäßigerweise weist die Steuereinrichtung einen zweiten Abschaltbaustein auf. Durch eine solche doppelte Sicherung ist gewährleistet, daß auch bei einem fehlerhaften ersten Abschaltbaustin beispielsweise die Stromversorgung bei fehlender Triggerung unterbrochen wird.

Mit Vorteil in der erste und - falls vorhanden - auch der zweite Abschaltbaustein ein Drehzahlwächter. Ein Drehzahlwächter ist besonders billig und als Abschaltbaustein sehr gut tauglich.

Vorteilhafterweise ist mindestens ein Busmodul, insbesondere ein CAN-Modul vorgesehen, welches zwischen der ersten und/oder zweiten Steuereinheit und einem Abschaltbaustein angeordnet ist. Ein solches Modul wandelt den Triggerpuls von der Steuereinheit in ein für den Abschaltbaustein günstigen Puls, beispielsweise eine positive Flanke, um. Hierdurch ist es nicht notwendig, den Abschaltbaustein direkt an den Feldbus zu setzen, was mit erheblichem Aufwand verbunden wäre.

Weitere Einzelheiten der erfindungsgemäßen Steuereinrichtung finden sich bei der Beschreibung der Ausführungsbeispiele.

Beim erfindungsgemäßen Verfahren zur Überwachung einer Steuerung wird die erste Steuereinheit über eine weitere, zweite Steuereinheit überwacht, indem die Zustände der Steuereinheiten verglichen werden.

Vorteilhafterweise findet eine gegenseitige Überwachung beider Steuereinheiten statt. Durch diese Redundanz wird die Steuerung mit größerer Sicherheit überwacht, da auch ein Defekt in der zweiten Steuereinheit erkannt wird.

Vorteilhafterweise erfolgt bei Verwendung eines Feldbus, insbesondere eines CAN-Bus, eine zyklische Überwachung von CAN-Modulen. Dabei wird von einer Steuereinheit zyklisch ein Ausgangssignal, ein "Lebenszeichen", von den CAN-Modulen angefordert. Wenn dieses Ausgangssignal eintrifft, erfolgt vom Datenbus-Betriebssystem eine Meldung an das Steuerprogramm, woraufhin eine Triggerung eines oder mehrerer Überwachungsbausteine veranlaßt wird, wodurch die Steuerfunktion aufrechterhalten werden.

Dieses Triggersignal des Überwachungsbausteins wird ausgehend vom Datenbus-Betriebssystem beispielsweise zum CAN-Datenbus-Treiber über eine CAN-Datenbus-Anschaltung, den CAN-Datenbus und gegebenenfalls ein Digitalausgabemodul zum Überwachungsbaustein übertragen, falls sämtliche Glieder der genannten Übertragungskette intakt sind.

In einer weiteren Störungssituation können die Geber und Sensoren der Peripherieelemente aufgrund unzureichender Spannungsversorgung fehlerhafte Meßwerte in den Steuerablauf einspeisen. Um dies zu vermeiden, wird vorteilhafterweise durch das erfindungsgemäße Verfahren auch die Spannung der Stromversorgung überwacht. Bei Unterschreiten eines Spannungsgrenzwertes unterbleibt eine Triggerung der Überwachungsbausteine und/oder eine Steuereinheit stellen ihre Arbeit ein.

Weitere Einzelheiten des erfindungsgemäßen Verfahrens finden sich in der Beschreibung der Ausführungsbeispiele.

Die Erfindung ist anhand der folgenden Ausführungsbeispiele in den Zeichnungsfiguren näher erläutert. Es zeigen:
- FIG 1: eine schematische Darstellung der Elemente einer Steuereinrichtung;
- FIG 2: eine schematische Darstellung einer Steuereinheit;
- FIG 3: ein Verarbeitungsablauf in einem Vergleichsmodul;
- FIG 4: ein Verarbeitungsablauf in einem Überwachungsmodul.

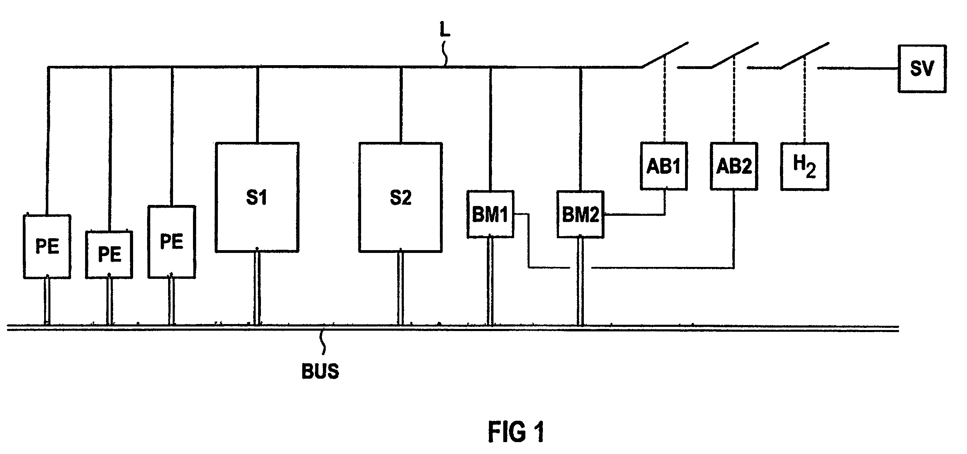

In Figur 1 ist als erste Steuereinheit S1 eine Modul- und Anlagensteuerung, sowie eine zweite Steuereinheit S2, nämlich die Überwachungssteuerung dargestellt.

Die erste Steuereinheit S1 umfaßt (nicht abgebildet) eine Zentraleinheit (u.a. Stromversorgung, CPU, Massenspeicherbaugruppe, Analogausgabebaugruppe z.B. zur Vorgabe eines Drehzahlsollwerts und ggf. eine Datenbus-Anschaltung), ein Steuerprogramm, ein Systemprogramm, Peripherieschaltungen (u.a. Zellspannungsmeßmodule, Analogeingabemodule, Temperaturerfassungsmodule, Digitalein- und ausgabemodule, sämtliche Module ggf. als Datenbusmodule) und ggf. einen Datenbus (CAN-Bus) und einen Datenbustreiber (CAN-Bus-Treiber).

Beide Steuereinheiten SE1, SE2 sind über einen Feldbus, der als ein CAN-Daten-Bus-System, kurz: CAN―Bus, ausgestaltet ist, miteinander verbunden. Der CAN-Bus, in der Figur mit BUS bezeichnet, verbindet des weiteren zwei Busmodule BM1, BM2, die als CAN-Module ausgestaltet sind, sowie einige Peripherieelemente PE (z.B. Meßwertgeber, Sensoren, Antriebe, Stellmotoren) mit den Steuereinheiten SE1, SE2. Die Busmodule BM1, BM2 sind über Signalleitungen mit Abschaltbausteinen AB1, AB2 verbunden.

Die Elemente der Steuereinrichtung, nämlich die Steuereinheiten SE1, SE2, die Busmodule BM1, BM2 und die Abschaltbausteine AB1, AB2, sowie auch die Peripherieelemente PE, die nicht zur Steuereinrichtung gehören, sind über eine Leitung L mit der Stromversorgung SV verbunden. Die Leitung kann durch die Abschaltbausteine AB1, AB2, sowie einen Wasserstoffsensor H₂ unterbrochen werden. Der Wasserstoffsensor H₂ bezieht sich insbesondere auf eine Steuereinrichtung für eine wasserstoffbetriebene Anlage, beispielsweise eine Brennstoffzellenanlage. Der Wasserstoffsensor H₂ kann im Störungsfall, z.B. beim Austreten von Wasserstoff ebenfalls die Stromversorgung unterbrechen.

Die erste Steuereinheit SE1 und die zweite Steuereinheit SE2 überwachen sich gegenseitig. Zur gegenseitigen Überwachung werden sowohl in der ersten Steuereinheit S1 als auch in der zweiten Steuereinheit SE2 in einstellbaren Zeitabständen die Zustände der Steuereinheiten SE1, SE2 ausgetauscht und verglichen. Ist nach Ablauf einer einstellbaren Synchronisationszeit eine Zustandsidentität festgestellt, so wird jeweils ein Triggerpuls an die Busmodule BM1, BM2 gesendet. Der Triggerpuls wird von den Busmodulen BM1, BM2 in veränderter Form, beispielsweise als positive Flanke, an die beiden Abschaltbausteine AB1, AB2 geschickt. Die als Drehzahlwächter ausgestalteten Abschaltbausteine AB1, AB2 überprüfen den regelmäßigen Eingang der Triggerpulse. Gehen die Triggerpulse regelmäßig ein (stimmt also die "Drehzahl"), so findet eine Unterbrechung der Stromversorgung durch die Abschaltbausteine AB1, AB2 nicht statt.

Erst dann, wenn bei einem Zustandsvergleich eine Abweichung festgestellt wird, unterbleiben die Triggerpulse, so daß z.B. die Stromversorgung abgeschaltet und die Steuerung stillgelegt wird.

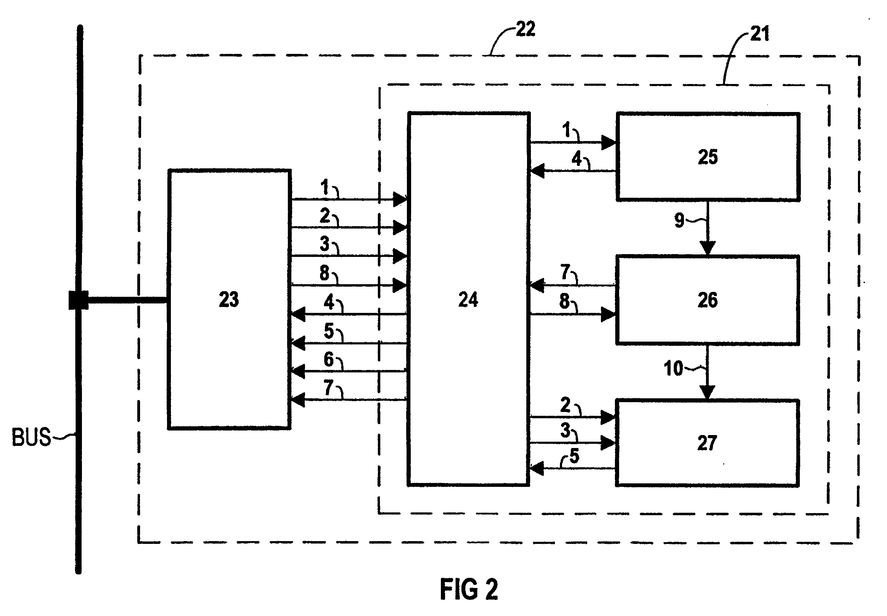

FIG 2 zeigt eine Steuereinheit 22. Sie umfaßt ein Steuermodul 21 und eine Bus-Anschaltung 23. Das Steuermodul 21 umfaßt seinerseits eine Schnittstelleneinheit 24, ein Steuer- und Regelungsmodul 25, ein Vergleichsmodul 26 und ein Überwachungsmodul 27. Die Steuereinheit 22 ist eine erste Steuereinheit und steht mit einer zweiten Steuereinheit über den Feldbus BUS zum Signalaustausch in Verbindung.

Zunächst werden über die Bus-Anschaltung 23 Prozeßeingangssignale 1, die von den Peripherieelementen der Bus-Anschaltung 23 über den Feldbus BUS übermittelt wurden, über die Schnittstelleneinheit 24 an das Steuer- und Regelungsmodul 25 weitergeleitet. Über das Steuer- und Regelungsmodul 25 werden die verfahrenstechnische Abläufe der Anlage oder Maschine gesteuert. Das Steuer- und Regelungsmodul 25 verarbeitet die Prozeßeingangssignale 1 und sendet Prozeßausgangssignale 4 an die Schnittstelleneinheit 24. Von dort werden sie über die Bus-Anschaltung 23 über den Feldbus BUS an die Peripherieelemente weitergeleitet. Tritt an einem der Peripherieelemente ein kritischer Zustand ein, so wird ein Alarmsignal 9 vom Steuer- und Regelungsmodul 25 an das Vergleichsmodul 26 gegeben.

Das Vergleichsmodul 26 empfängt das Alarmsignal 9 vom Steuer- und Regelungsmodul 25, sendet ein Stopsignal 10 an das Überwachungsmodul 27, das die Triggerung der Abschaltbausteine einstellt und die Stromversorgung der Anlage somit unterbrochen wird.

Das Vergleichsmodul 26 empfängt auch Fremdzustandssignale 8 der zweiten Steuereinheit. Nach der Verarbeitung sendet das Vergleichsmodul 26 Eigenzustandssignale 7 über die Schnittstelleneinheit 24 und die Bus-Anschaltung 23 an die zweite Steuereinheit.

Die beiden Vergleichsmodule 26 der ersten und zweiten Steuereinheit stehen in Verbindung und tauschen bei jedem Zustandswechsel Signale aus, welche mit dem jeweils eigenen aktuellen Zustand verglichen werden. Falls nach einer parametrisierbaren Synchronisationszeit eine Abweichung der Zustände voneinander festgestellt wird, beendet das jeweilige Vergleichsmodul 26 die Aktivität des Überwachungsmoduls 27 durch das Stopsignal 10.

Von der Schnittstelleneinheit 24 werden zur Überwachung des Felsbus und der Busmodule zyklisch Meldeaufforderungen 6 an die Busmodule geschickt. Letztere müssen sich innerhalb einer Überwachungszeit zurückmelden, damit ein Ausgangssignal 2 der Busmodule - ein "Lebenszeichen" ― zur Überwachungseinheit 27 geleitet wird.

Damit das Überwachungsmodul 27 einen Triggerpuls für einen Abschaltbaustein ausgibt, müssen drei Bedingungen erfüllt sein: Es muß von jedem Busmodul ein "Lebenszeichen" 2 vorliegen; die Zustände der beiden Steuerungen müssen gleich sein; und es muß der Triggerpuls 3 von der zweiten Steuereinheit beim Überwachungsmodul 27 angekommen sein. Sind die Bedingungen erfüllt, so gibt das Überwachungsmodul 27 einen Triggerpuls 5 aus, der über die Schnittstelleneinheit 24, die Bus-Anschaltung 23, den Feldbus BUS und ein Busmodul zu einem Abschaltbaustein gesendet wird. Beim Triggerpuls hinter dem Busmodul handelt es sich um ein positives Flankensignal.

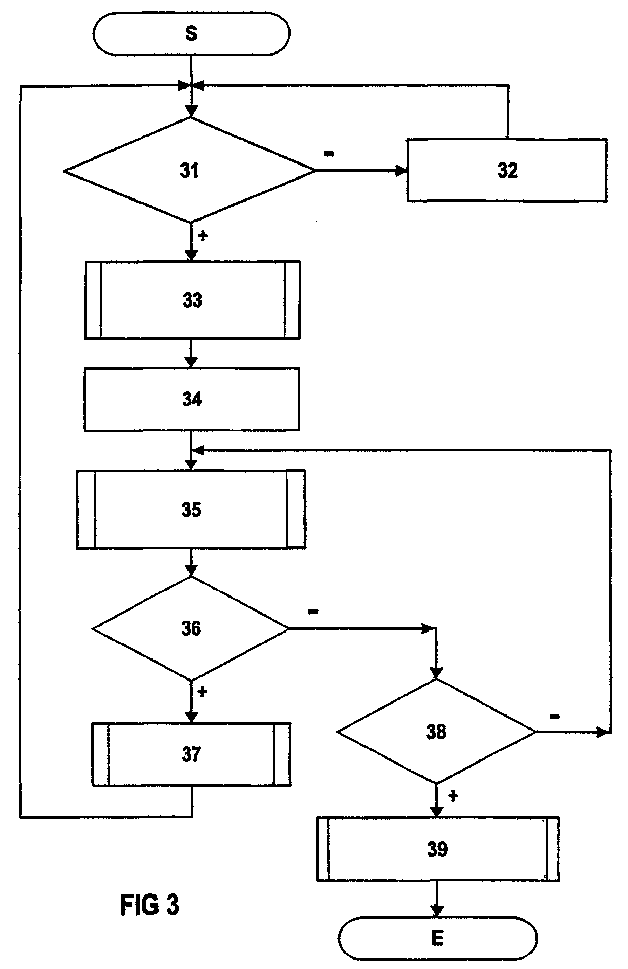

FIG 3 zeigt einen Verfahrensablauf im Vergleichsmodul einer Steuereinheit mit einer Synchronisationszeit von 100 ms. Der Start des Verfahrensablaufs ist durch S markiert. Im ersten Verfahrensschritt 31 wird ermittelt, ob ein Zustandswechsel erforderlich ist. Falls das nicht der Fall ist (-), so wird im Verfahrensschritt 32 100 ms gewartet, bevor die Abfrage 31 erneut gestartet wird. Bei einem Zustandswechsel (+) wird im Verfahrensschritt 33 der neue Zustand an das Vergleichsmodul der anderen Steuerungseinheit gesendet. Im anschließenden Verfahrensschritt 34 wird der Beginn einer Synchronisationszeitperiode markiert und dann der Zustand der anderen Steuereinheit eingelesen (35). In der Abfrage 36 wird die Identität der beiden Zustände ermittelt. Sind beide Zustände identisch (+) springt das Verfahren zurück zur Abfrage 31. Sind die Zustände nicht identisch (-), so wird in der Abfrage 38 geprüft, ob die Synchronisationszeitperiode abgelaufen ist. Ist das nicht der Fall(-), so wird als nächstes der Zustand der anderen Steuereinheit im Verfahrensschritt 35 erneut eingelesen. Ist jedoch die Synchronisationszeitperiode abgelaufen (+), so wird ein Aufruf an das Überwachungsmodul geschickt, den Triggerpuls nicht weiter zu senden und das Verfahren ist beendet (E).

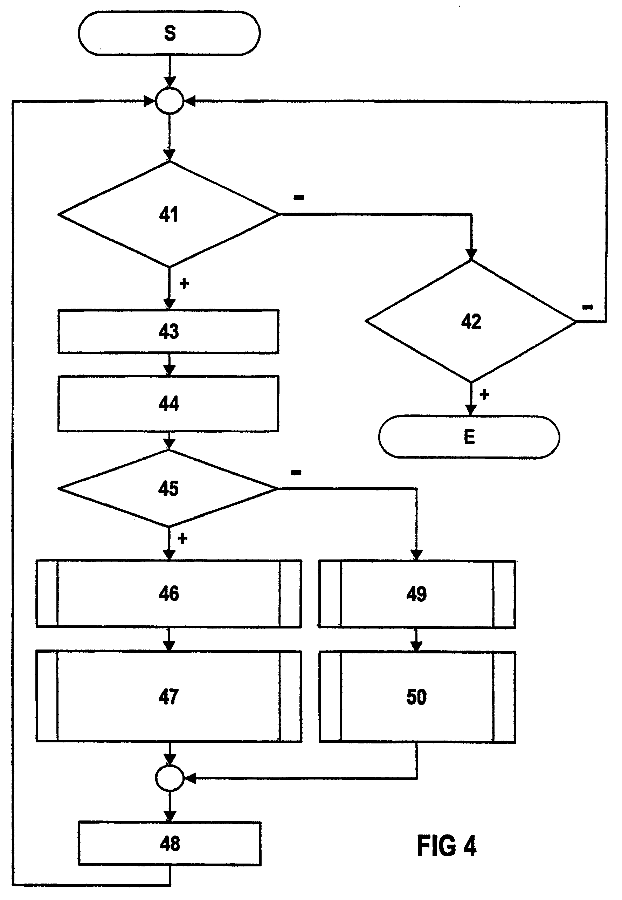

FIG 4 zeigt den Verarbeitungsablauf im Überwachungsmodul. Der Start des Verarbeitungsablaufs ist mit S markiert. In einem ersten Verfahrensschritt 41 wird das "Lebenszeichen" eines Busmoduls abgefragt. Liegt das "Lebenseichen" nicht vor (-), so wird anschließend (42) geprüft, ob die Überwachungszeit abgelaufen ist. Ist sie abgelaufen (+), wird das Verfahren beendet (E) und keine Triggerpulse mehr zu einem Abschaltbaustein geschickt. Ist die Zeit noch nicht abgelaufen (-) wird wieder das "Lebenszeichen" abgefragt (41). Ist das "Lebenszeichen" da (+)("CAN-Bus-Flag-gesetzt"), so wird anschließend (43) das entsprechende Daten-Bit zurückgesetzt und die Überwachungszeit neu gestartet (44).

Im nächsten Verfahrensschritt 45 wird abgefragt, ob das Verfahren in der ersten oder der zweiten Steuereinheit eingesetzt ist. Diese Abfrage ist eingefügt, damit das Programm in beiden Steuereinheiten eingesetzt werden kann. Ist das Verfahren in der ersten Steuereinheit eingesetzt (+), so wird das Triggersignal der zweiten Steuereinheit eingelesen (46) und anschließend ein Triggerpuls für die Abschaltbausteine ausgegeben (47). Nach einer Wartezeit von beispielsweise 100ms (48) startet das Verfahren mit dem Verfahrensschritt 41 erneut. Wird das Verfahren jedoch in der zweiten Steuereinheit eingesetzt (-), so wird ein Triggersignal invertiert ("getoggelt") (49) und anschließend der ersten Steuereinheit übertragen (50). Nach einer Wartezeit von beispielsweise 500ms (48) startet das Verfahren mit dem Verfahrensschritt 41 erneut.

## Patentansprüche

1. Steuereinrichtung einer Anlage mit einer ersten Steuereinheit (S1) und einer mit der ersten Steuereinheit (S1) im Signaiaustausch stehenden zweiten Steuereinheit (S2), die zur Überwachung der ersten Steuereinheit (S1) vorgesehen ist,
**gekennzeichnet durch**
- ein Vergleichsmodul (26), das zum Vergleich der Zustände der Steuereinheiten (S1,S2) vorgesehen ist,
- einen ersten mit dem Vergleichsmodul (26) im Signalaustausch stehenden Abschaltbaustein (AB1), der zur Abschaltung der Anlage oder Maschine im Falle des Ausbleibens eines Triggerpulses von einer der Steuereinheiten (S1, S2) vorgesehen ist.

2. Steuereinrichtung nach Anspruch 1, **gekennzeichnet durch** einen zweiten Abschaltbaustein (AB2), der zur Abschaltung der Anlage oder Maschine im Falle des Ausbleibens eines Triggerpulses von einer der Steuereinheiten (S1, S2) vorgesehen ist.

3. Steuereinrichtung nach Anspruch 1 oder 2, **dadurch gekennzeichnet, daß** der erste Abschaltbaustein (AB1) und der zweite Abschaltbaustein (AB2) Drehzahlwächter sind.

4. Steuereinrichtung nach einem der vorhergehenden Ansprüche, **dadurch gekennzeichnet, daß** die Steuereinheiten (S1, S2) über einen Feldbus (BUS), insbesondere einen CAN-Bus, miteinander verbunden sind.

5. Steuereinrichtung nach Anspruch 4, **gekennzeichnet durch** mindestens ein zwischen der ersten oder zweiten Steuereinheit (S1,S2) angeordnetes Busmodul (BM1), das zum Übertragen eines Triggerpulses von einer der Steuereinheiten (S1,S2) zu einem Abschaltbaustein (AB1,AB2) vorgesehen ist.

6. Steuereinrichtung nach einem der vorhergehenden Ansprüche, **dadurch gekennzeichnet, daß** mindestens eine der Steuereinheiten (S1,S2,21) eine Bus-Anschaltung und eine Zentraleinheit (22) mit folgenden miteinander im Signalaustausch stehenden Elementen aufweist:
- ein Steuer- und Regelungsmodul (25),
- das Vergleichsmodul (26),
- ein Überwachungsmodul (27) und
- eine Schnittstelleneinheit (24).

7. Steuereinrichtung nach einem der vorhergehenden Ansprüche, **dadurch gekennzeichnet, daß** die erste Steuereinheit (S1) eine Modul- und Anlagensteuerung einer Brennstoffzellenanlage mit einem Brennstoffzellenmodul ist.

8. Verfahren zum Überwachen einer Steuerung bei dem
- Eingangssignale von Peripherieelementen (PE) in beiden Steuereinheiten (S1,S2) identisch verarbeitet werden,
- eine erste Steuereinheit (S1) und eine zweite Steuereinheit (S2) parallel Ausgangssignale für Peripherieelemente (PE) ermitteln,
- die Zustände der ersten Steuereinheit (S1) mit den Zuständen der zweiten Steuereinheit (S2) verglichen werden,
- nur bei Zustandsidentität ein Triggersignal an einen Abschaltbaustein (AB1,AB2) abgesendet wird,
- die Abblauffunktionen der Steuerung nur bei regelmäßiger Triggerung des Abschaltbausteins (AB1,AB2) aufgrechterhalten bleibt.

9. Verfahren nach Anspruch 8, **dadurch gekennzeichnet, daß** die erste Steuereinheit (S1) das Triggersignal von der zweiten Steuereinheit (S2) empfängt, wenn in der zweiten Steuereinheit (S2) die Zustandsidentität festgestellt wurde.

10. Verfahren nach Anspruch 9, **dadurch gekennzeichnet, daß** das Triggersignal von der ersten Steuereinheit (S1) ab den Abschaltbaustein (AB1, AB2) abgesendet wird, wenn der Zustandsvergleich in der ersten Steuereinheit (S1) eine Zustandsidentität ergeben hat.

11. Verfahren nach einem der Ansprüche 8 bis 10,
**dadurch gekennzeichnet, daß** die erste Steuereinheit (S1) und die zweite Steuereinheit (S2) jeden eigenen Zustandswechsel ermitteln und den eigenen Zustand zum Zustandsvergleich der anderen Steuereinheit (S2,S1) übermitteln.

12. Verfahren nach Anspruch 11, **dadurch gekennzeichnet, daß** bei Übereinstimmung der verglichenen Zustände ein Triggersignal an einen Abschaltbaustein (AB1,AB2) abgesendet wird.

13. Verfahren nach einem der Ansprüche 8 bis 12,
**dadurch gekennzeichnet, daß** die Steuereinheiten (S1,S2) identische Signale von Peripherieelementen (PE) erhalten.

14. Verfahren nach Anspruch 13,
**dadurch gekennzeichnet, daß** nur von der ersten Steuereinheit (S1) Ausgangssignale an die Peripherieelemente (PE) abgesendet werden.

15. Verfahren nach Anspruch 13 oder 14, **dadurch gekennzeichnet, daß** die Signale über einen Feldbus (Bus), insbesondere über einen CAN-Bus, übertragen werden.

16. Verfahren nach Anspruch 15,
**dadurch gekennzeichnet, daß** das Triggersignal zuerst einem Busmodul (BM1,BM2) zugeht und von dort an den Abschaltbaustein (AB1,AB2) weitergeleitet wird.

17. Verfahren nach Anspruch 16,
**dadurch gekennzeichnet, daß** eine der Steuereinheiten (S1,S2) das Busmodul überwacht, indem nur bei Vorliegen eines Ausgangssignals des Busmoduls (BM1,BM2) eine Triggerung des Abschaltbausteins (AB1,AB2) veranlaßt wird.

18. Verfahren nach einem der Ansprüche 8 bis 17,
**dadurch gekennzeichnet, daß** das Triggersignal an zwei Abschaltbausteine (AB1,AB2) abgesendet wird.

19. Verfahren nach Anspruch 18, **dadurch gekennzeichnet, daß** das Triggersignal zuerst zwei Busmodulen (BM1,BM2) zugeht, wobei das erste Busmodul (BM1) das Triggersignal an den ersten Abschaltbaustein (AB1) und das zweite Busmodul (BM2) das Triggersignal an den zweiten Abschaltbaustein weiterleitet.

20. Verfahren nach einem der Ansprüche 8 bis 19,
**dadurch gekennzeichnet, daß** eine Überwachung der Spannung der Stromversorgung (SV) der Maschine, Anlage oder des Geräts durch eine der Steuereinheiten (S1,S2) erfolgt.

## Claims

1. Control device in an installation having a first control unit (S1) and a second control unit (S2) which interchanges signals with the first control unit (S1) and is provided in order to monitor the first control unit (S1),
**characterized by**
- a comparison module (26) which is provided in order to compare the states of the control units (S1, S2),
- a first disconnection component (AB1) which interchanges signals with the comparison module (26) and is provided in order to disconnect the installation or machine in the event of a trigger pulse from one of the control units (S1, S2) being absent.

2. Control device according to Claim 1, **characterized by** a second disconnection component (AB2) which is provided in order to disconnect the installation or machine in the event of a trigger pulse from one of the control units (S1, S2) being absent.

3. Control device according to Claim 1 or 2, **characterized in that** the first disconnection component (AB1) and the second disconnection component (AB2) are rotation-speed monitors.

4. Control device according to one of the preceding claims, **characterized in that** the control units (S1, S2) are connected to one another via a field bus (BUS), particularly a CAN bus.

5. Control device according to Claim 4, **characterized by** at least one bus module (BM1) which is arranged between the first or second control unit (S1, S2) and is provided in order to transmit a trigger pulse from one of the control units (S1, S2) to a disconnection component (AB1, AB2).

6. Control device according to one of the preceding claims, **characterized in that** at least one of the control units (S1, S2, 21) has a bus access unit and a central processing unit (22) having the following elements which interchange signals with one another:
- a control and regulation module (25),
- the comparison module (26),
- a monitoring module (27), and
- an interface unit (24).

7. Control device according to one of the preceding claims, **characterized in that** the first control unit (S1) is a module and installation controller in a fuel cell installation having a fuel cell module.

8. Method for monitoring a controller, in which
- input signals from peripheral elements (PE) are processed identically in both control units (S1, S2),
- a first control unit (S1) and a second control unit (S2) ascertain output signals for peripheral elements (PE) in parallel,
- the states of the first control unit (S1) are compared with the states of the second control unit (S2),
- only in the event of state identity is a trigger signal sent to a disconnection component (AB1, AB2),
- the controller's flow functions are maintained only if the disconnection component (AB1, AB2) is triggered in a regular manner.

9. Method according to Claim 8, **characterized in that** the first control unit (S1) receives the trigger signal from the second control unit (S2) if the state identity has been established in the second control unit (S2).

10. Method according to Claim 9, **characterized in that** the trigger signal is sent from the first control unit (S1) to the disconnection component (AB1, AB2) if the state comparison in the first control unit (S1) showed state identity.

11. Method according to one of Claims 8 to 10, **characterized in that** the first control unit (S1) and the second control unit (S2) ascertain every intrinsic state change and transmit the intrinsic state for the state comparison in the other control unit (S2, S1).

12. Method according to Claim 11, **characterized in that**, if the compared states match, a trigger signal is sent to a disconnection component (AB1, AB2).

13. Method according to one of Claims 8 to 12,
**characterized in that** the control units (S1, S2) receive identical signals from peripheral elements (PE).

14. Method according to Claim 13,
**characterized in that** only the first control unit (S1) sends output signals to the peripheral elements (PE).

15. Method according to Claim 13 or 14, **characterized in that** the signals are transmitted via a field bus (Bus), particularly via a CAN bus.

16. Method according to Claim 15,
**characterized in that** the trigger signal is first sent to a bus module (BM1 BM2), from where it is forwarded to the disconnection component (AB1, AB2).

17. Method according to Claim 16,
**characterized in that** one of the control units (S1, S2) monitors the bus module while prompting the disconnection component (AB1, AB2) to be triggered only if there is an output signal from the bus module (BM1, BM2).

18. Method according to one of Claims 8 to 17,
**characterized in that** the trigger signal is sent to two disconnection components (AB1, AB2).

19. Method according to Claim 18, **characterized in that** the trigger signal is first sent to two bus modules (BM1, BM2), with the first bus module (BM1) forwarding the trigger signal to the first disconnection component (AB1) and the second bus module (BM2) forwarding the trigger signal to the second disconnection component.

20. Method according to one of Claims 8 to 19,
**characterized in that** the voltage from the power supply (SV) for the machine, installation or appliance is monitored by one of the control units (S1, S2).

## Revendications

1. Dispositif de commande d'une installation ayant une première unité de commande (S1) et une deuxième unité de commande (S2) en relation d'échange de signaux avec la première unité de commande, laquelle est prévue pour surveiller la première unité de commande (S1), **caractérisé par**
• un module de comparaison (26) qui est prévu pour comparer les états des unités de commande (S1, S2),
• un premier composant de coupure (AB1), en relation d'échange de signaux avec un module de comparaison (26), qui est prévu pour débrancher l'installation ou la machine au cas où manque une impulsion de déclenchement d'une des unités de commande (S1, S2).

2. Dispositif de commande selon la revendication 1, **caractérisé par** un deuxième composant de coupure (AB2) qui est prévu pour débrancher l'installation ou la machine au cas où manque une impulsion de déclenchement d'une des unités de commande (S1, S2).

3. Dispositif de commande selon la revendication 1 ou 2, **caractérisé en ce que** le premier composant de coupure (AB1) et le deuxième composant de coupure (AB2) sont des contrôleurs de fréquence.

4. Dispositif de commande selon l'une des revendications précédentes, **caractérisé en ce que** les unités de commande (S1, S2) sont liées l'une à l'autre par un bus de zone (BUS) en particulier par un bus CAN.

5. Dispositif de commande selon la revendication 4, **caractérisé par** au moins un module de bus (BM1), placé entre la première ou la deuxième unité de commande (S1, S2), qui est prévu pour transmettre une impulsion de déclenchement d'une des unités de commande (S1, S2) à un composant de coupure (AB1, AB2).

6. Dispositif de commande selon l'une des revendications précédentes, **caractérisé en ce qu'**au moins une des unités de commande (S1, S2, 21) présente une connexion de bus et une unité centrale (22) avec les éléments suivants en relation d'échange de signaux :
• un module de commande et de réglage (25),
• le module de comparaison (26)
• un module de surveillance (27) et
• une unité d'interface (24).

7. Dispositif de commande selon l'une des revendications précédentes, **caractérisé en ce que** la première unité de commande (S1) est une commande de module et d'installation d'une installation de piles à combustible ayant un module de pile à combustible.

8. Procédé pour surveiller une commande pour lequel
• des signaux d'entrée d'éléments périphériques (PE) sont traités de façon identique dans les deux unités de commande (S1, S2),
• une première unité de commande (S1) et une deuxième unité de commande (S2) définissent parallèlement des signaux de sortie pour les éléments périphériques (PE),
• les états de la première unité de commande (S1) sont comparés avec les états de la deuxième unité de commande (S2),
• on n'envoie un signal de déclenchement à un composant de coupure (AB1, AB2) qu'en cas d'identité des états,
• les fonctions de déroulement de la commande ne sont maintenues qu'en cas de déclenchement régulier du composant de coupure (AB1, AB2).

9. Procédé selon la revendication 8, **caractérisé en ce que** la première unité de commande (S1) reçoit le signal de déclenchement de la deuxième unité de commande (S2) lorsque l'identité d'état a été établie dans la deuxième unité de commande (S2).

10. Procédé selon la revendication 9, **caractérisé en ce que** le signal de déclenchement de la première unité de commande (S1) est envoyé au composant de coupure (AB1, AB2) lorsque la comparaison d'états dans la première unité de commande (S1) a conclu à une identité d'état.

11. Procédé selon l'une des revendications précédentes, **caractérisé en ce que** la première unité de commande (S1) et la deuxième unité de commande (S2) établissent chaque échange d'état propre et transmettent l'état propre à l'autre unité de commande (S1, S2) à des fins de comparaison d'états.

12. Procédé selon la revendication 11, **caractérisé en ce qu'**un signal de déclenchement est envoyé à un composant de coupure (AB1, AB2) lorsque les états comparés correspondent.

13. Procédé selon l'une des revendications 8 à 12, **caractérisé en ce que** les unités de commande (S1, S2) obtiennent des signaux identiques des éléments périphériques (PE).

14. Procédé selon la revendication 13, **caractérisé en ce que** des signaux de sortie sont envoyés aux éléments périphériques (PE) seulement par la première unité de commande (S1).

15. Procédé selon la revendication 13 ou 14, **caractérisé en ce que** les signaux sont transmis par un bus de zone (Bus), en particulier par un bus CAN.

16. Procédé selon la revendication 15, **caractérisé en ce que** le signal de déclenchement parvient d'abord à un module de bus (BM1, BM2) et de là est transmis au composant de coupure (AB1, AB2).

17. Procédé selon la revendication 16, **caractérisé en ce qu'**une des unités de commande (S1, S2) surveille le module de bus, un déclenchement du composant de coupure (AB1, AB2) étant seulement provoqué lorsqu'il existe un signal de sortie du module de bus (BM1, BM2).

18. Procédé selon l'une des revendications 8 à 17, **caractérisé en ce que** le signal de déclenchement est envoyé à deux composants de coupure (AB1, AB2).

19. Procédé selon la revendication 18, **caractérisé en ce que** le signal de déclenchement parvient d'abord à deux modules de bus (BM1, BM2), le premier module de bus (BM1) transmettant le signal de déclenchement au premier composant de coupure (AB1) et le deuxième module de bus (BM2) transmettant le signal de déclenchement au deuxième composant de coupure (AB2).

20. Procédé selon l'une des revendications 8 à 19, **caractérisé en ce qu'**une surveillance de la tension de l'alimentation en courant (SV) de la machine, de l'installation ou de l'appareil est réalisée par une des unités de commande (S1, S2).
